# EUROPÄISCHE PATENTSCHRIFT

(11) **EP 0 542 101 B1**
(45) Veröffentlichungstag und Bekanntmachung des Hinweises auf die Patenterteilung: **01.02.1995**
(21) Anmeldenummer: 92118810.8
(22) Anmeldetag: 03.11.1992
(51) Int. Cl.: F24J 2/46, F24J 2/24

(54) **Sonnenkollektor**
Solar collector
Collecteur solaire

(30) Priorität: 13.11.1991 DE 4137342
(43) Veröffentlichungstag der Anmeldung: 19.05.1993
(73) Patentinhaber: Müller, Friedrich, D-74589 Satteldorf (DE)
(72) Erfinder: Müller, Friedrich, D-74589 Satteldorf (DE)
(74) Vertreter: von Hellfeld, Axel, Dr. Dipl.-Phys.

(56) Entgegenhaltungen:
- US-A- 4 098 259
- US-A- 4 224 924
- PATENT ABSTRACTS OF JAPAN vol. 10, no. 153 (M-484) 3. Juni 1986 & JP-A-61 006 544 (MATSUSHITA DENDI SANGYO KK) 13. Januar 1986
- PATENT ABSTRACTS OF JAPAN vol. 4, no. 116 (M-27) 19. August 1980 & JP-A-55 075 160 (SHARP CORP) 6. Juni 1980
- PATENT ABSTRACTS OF JAPAN vol. 10, no. 109 (M-472) 23. April 1986 & JP-A-60 238 682 (TOSHIBA KK) 27. November 1985

## Beschreibung

Die Erfindung betrifft einen Sonnenkollektor mit einem Gehäuse und durch Öffnungen in das Gehäuse führenden Zu- und Ableitungen eines Kollektorabsorberrohres für eine Wärmeträgermedium.

Solche Sonnenkollektoren können einzeln verwendet werden, sie sind jedoch häufig neben- oder übereinander in Reihen zu einem größeren Kollektorfeld einer Solaranlage zusammengefaßt. Solaranlagen dieser Art sind in der Lage, große Mengen an Warmwasser bereitzustellen, beispielsweise für ein Schwimmbad oder einen Hotelkomplex.

Jeder einzelne Sonnenkollektor in einem Kollektorfeld weist eine Zu- und Ableitung für das ihn durchströmende Wärmeträgermedium auf, die an je eine Verteilerleitung angeschlossen ist, d.h. jeder Reihe eines Kollektorfeldes ist eine Verteilerleitung zugeordnet, von der die Zuleitungen der einzelnen Sonnenkollektoren abzweigen, und eine andere Verteilerleitung, in die die Ableitungen münden. Die Verteilerleitungen sind fast immer aus einem metallischen Werkstoff, üblicherweise aus Kupfer, hergestellt. Verteilerleitungen aus Kunststoff konnten sich bisher wegen des hohen Preises oder der fehlenden Temperaturbeständigkeit und Dauerhaltbarkeit nicht durchsetzen. Durch die Entwicklung neuer Kunststoffe kann sich das jedoch in Zukunft ändern.

Die Verteilerleitungen, die das Kollektorfeld mit einem Warmwasserspeicher verbinden, sind erheblichen Temperaturunterschieden ausgesetzt. So kann das von der Sonne aufgeheizte Wärmeträgermedium die Verteilerleitungen tagsüber auf mehr als 70°C erhitzen, während in kalten Winternächten Temperaturen bis zu etwa 30° unter Null auftreten können. Noch größer wird der mögliche Temperaturunterschied, wenn eine das Wärmeträgermedium umwälzende Pumpe z.B. bei Stromausfall nicht mehr arbeitet. Bei fortdauernder Sonneneinstrahlung kann sich dann das Wärmeträgermedium im Sonnenkollektor auf über 200°C erhitzen, wobei sich diese Temperatur ohne wesentliche Abkühlung auch auf die nahe gelegenen Verteilerleitungen überträgt.

Bei der Konstruktion einer Solaranlage muß also davon ausgegangen werden, daß die Differenz zwischen Minimal- und Maximaltemperatur in den Verteilerleitungen ungefähr 230°C beträgt. Je länger eine einzelne Kollektorreihe in einer Solaranlage ist und je länger infolgedessen die Verteilerleitungen sind, desto bedeutsamer wird das Problem der Längenänderung der Verteilerleitungen aufgrund unterschiedlicher Temperaturen. Legt man eine Verteilerleitung aus Kupfer mit einer bei größeren Solaranlagen durchaus üblichen Länge von 50 Metern zugrunde, so muß bei einer Wärmedehnung von 1,7 mm pro Meter und 100°C für Kupfer mit einer maximal möglichen Längenänderung von 200 mm gerechnet werden. Die heute verfügbaren Hartkunststoffe, die als Material für Verteilerleitungen einsetzbar wären, weisen häufig eine noch höhere Wärmedehnung auf. Ohne einen Dehnungsausgleich würden insbesondere an den Kollektoren, bei denen sich die Längenänderung der Verteilerleitung ihrem Maximalbetrag nähert, die in das Gehäuse geführten Zu- und Ableitungen gegen den Rand ihrer Öffnungen gedrückt und abgeknickt werden.

Es ist bekannt, zur Lösung dieses Problems Dehnungskompensatoren, beispielsweise in Balgform, in die Verteilerleitungen etwa nach jedem siebten Kollektor einzusetzen. Da Dehnungskompensatoren sich jedoch schon bei wechselndem Druck in den Verteilerleitungen, wie er durch wechselnde Temperaturen hervorgerufen wird, ausdehnen würden, müssen Dehnungskompensatoren enthaltende Verteilerleitungen an mindestens zwei Stellen - meist am Anfang und Ende einer Kollektorreihe - befestigt werden. Auf einem Ziegeldach ist die erforderliche Befestigung nur schwer und mit hohem Aufwand durchzuführen, wobei zusätzlich der optische Gesamteindruck verschlechtert wird. Hinzu kommt, daß Dehnungskompensatoren teure Bauteile sind und daher den Preis für eine komplette Solaranlage in die Höhe treiben.

Es ist auch möglich, statt der Zu- und Ableitungen aus duktilem Material flexible Schläuche aus Metall oder einem geeigneten Kunststoff zu verwenden. Diese Lösung ist jedoch ebenfalls zu teuer.

Selbst bei kleineren Solaranlagen, die noch ohne Dehnungskompensatoren auskommen, führt die auf die temperaturbedingte Längenänderung der Verteilerleitungen zurückgehende ständige Biegewechselbeanspruchung im Bereich der Zu- und Ableitungen, d.h. von der Verteilerleitung bis hinein in das Kollektorgehäuse, nach längerer Betriebszeit zum Versagen infolge von Leitungsbruch.

Aus der US 4 098 259 ist ein Sonnenkollektor mit einem Gehäuse bekannt, in dem eine Vielzahl parallel geschalteter Absorberrohre angeordnet sind, deren Zu- bzw. Abflüsse durch Sammelleitungen miteinander verbunden sind. Die Sammelleitungen wiederum sind über je eine Zu- oder Ableitung mit Verteilerleitungen verbunden. Die Gesamtheit der durch die Sammelleitungen miteinander verbundenen Absorberrohre ist im Gehäuse des Sonnenkollektors nicht ortsfest fixiert, sondern liegt lediglich auf einer Isolierung auf und ist innerhalb der durch das Gehäuse gesetzten Grenzen frei verschiebbar, weshalb es zu keinem aus einer Biegewechselbeanspruchung resultierenden Problem kommt.

In der DE 28 31 591 A1 ist ein Sonnenkollektor offenbart, bei dem eine Vielzahl mechanisch durch Stegabschnitte miteinander verbundener Absorberrohre parallel zueinander angeordnet ist. Je zwei nebeneinanderliegende Absorberrohre sind durch ein U-förmiges Verbindungsstück zu einem Rohrpaar verbunden, dessen Ein- und Auslaß mit je einer Sammelleitung verbunden ist. In der Nähe der innerhalb des Sonnenkollektorgehäuses verlaufenden Sammelleitungen sind die Absorberrohre von den sie untereinander mechanisch verbindenden Stegen weggezogen, um die Verbindung mit den Sammelleitungen zu erleichtern. Aus Biegewechselbeanspruchungen resultierende Probleme sind in dieser Druckschrift nicht erwähnt.

Aus der US 3 980 071 ist ein Sonnenkollektor bekannt, in dessen Gehäuse mehrere Absorberrohrmodule angeordnet sind, von denen jedes fünf parallel verlaufende Absorberrohre aufweist. Die Enden der Absorberrohre sind durch Sammelleitungen miteinander verbunden. Innerhalb des Gehäuses ist ein Absorberrohrmodul mit einem in Durchströmungsrichtung nächsten Modul durch eine gebogene, flexible Leitung verbunden. Es handelt sich bei den flexiblen Leitungen also nicht um aus dem Sonnenkollektorgehäuse führende Zu- oder Ableitungen, sondern lediglich um Verbindungsleitungen der in Serie geschalteten Absorberrohrmodule, zwischen denen kaum Wärmeunterschiede auftreten. Die Verbindungsleitungen sind demzufolge nahezu keiner Biegewechselbeanspruchung ausgesetzt.

Der Erfindung liegt die Aufgabe zugrunde, einen Sonnenkollektor zu schaffen, bei dem die durch die Längenänderung der Verteilerleitung auftretenden Probleme verringert sind und der eine höhere Standzeit bis zum Versagen der Zu- oder Ableitung aufweist. Auch bei großen Solaranlagen mit entsprechend langen Kollektorreihen sollen dabei keine teuren Dehnungskompensatoren oder Schläuche erforderlich sein.

Erfindungsgemäß ist diese Aufgabe durch einen Sonnenkollektor gelöst, der die Merkmale des Anspruchs 1 aufweist.

Das Absorberrohr ist also nicht wie üblich kurz nach dem Eintritt in das Kollektorgehäuse ortsfest fixiert, sondern ist nach seinem Eintritt in das Gehäuse zumindest das Zehnfache, bevorzugt zumindest das Fünfzehnfache und besonders bevorzugt zumindest das Zwanzigfache des Absorberrohrdurchmessers fixierungsfrei. In einer anderen Ausführungsform beträgt die fixierungsfreie Strecke des Absorberrohrs nach seinem Eintritt in das Gehäuse das Zwanzig- bis Fünfzigfache des Absorberrohrdurchmessers.

Der zumindest eine Bogen kann die durch Temperaturunterschiede hervorgerufene Längenänderung der angeschlossenen Verteilerleitung besser aufnehmen, ohne daß die Verbindungsstellen zwischen Zu- oder Ableitungen und Verteilerleitung bzw. Zu- oder Ableitung und Absorberrohr über Gebühr belastet werden. Je nach dem Betrag der zu erwartenden Längenänderung können auch mehrere Bögen in den Zu- und Ableitungen vorgesehen sein, um die Dehnungsausgleichsfähigkeit der Zu- und Ableitungen weiter zu verbessern.

Erfindungsgemäß wird auf diese Weise eine reduzierte Biegebeanspruchung im Bereich der Zu- und Ableitungen erreicht, da sich die Biegebeanspruchung auf einen größeren Bereich verteilt und deshalb nicht so schnell zum Versagen einer Leitung führt.

Bei einer abgewandelten Ausführungsform des erfindungsgemäßen Sonnenkollektors ist der Durchmesser der Öffnungen im Gehäuse, durch die die Zu- und Ableitungen geführt sind, in jedem Fall mehr als doppelt so groß als der Durchmesser der Zu- oder Ableitung selbst. Durch diese Maßnahme ist dafür gesorgt, daß die Zu- oder Ableitung bei einer Längenänderung der Verteilerleitung nicht gegen den Rand der Öffnung im Gehäuse stößt und abknickt. Für den Fall, daß die Hälfte des Betrags der infolge von Temperaturunterschieden zu erwartenden Längenänderung der angeschlossenen Verteilerleitung größer ist als der doppelte Durchmesser der Zu- oder Ableitung, soll der Durchmesser der Öffnungen im Gehäuse höchstens etwa so groß sein, wie die Hälfte des zu erwartenden Betrags der Längenänderung. Da sich die Verteilerleitungen bei Temperaturänderung in Axialrichtung gesehen nach beiden Seiten gleichmäßig ausdehnen bzw. zusammenziehen, ist es ausreichend, die Öffnungen nur etwa halb so groß wie die zu erwartende Längenänderung zu machen. Voraussetzung dafür ist, daß die Zu- bzw. Ableitungen der jeweils randäußeren Sonnenkollektoren einer Kollektorreihe so montiert sind, daß sie bei tiefer Temperatur im wesentlichen an den einander zugewandten, der Mitte der Kollektorreihe näheren Rand ihrer Öffnung stoßen. Bei Temperaturerhöhung steht dann im wesentlichen der volle Betrag der halben Längenänderung zur Verfügung, bevor die Zu- oder Ableitungen am gegenüberliegenden Rand ihrer Öffnung anstoßen.

Da die Verteilerleitungen sich im wesentlichen nur in Axialrichtung ausdehnen und zusammenziehen, sind die Öffnungen für die Zu- und Ableitungen bevorzugt oval oder schlitzförmig ausgeführt und so angeordnet, daß ihre größte Abmessung in Axialrichtung der Verteilerleitungen liegt. Um zu verhindern, daß Schmutz oder Feuchtigkeit durch den freien Teil der Öffnungen in das Gehäuse gelangt, ist dieser vorteilhaft durch elastische Bälge mit einer Durchführung für die Zu- oder Ableitung verschlossen, wobei der Bewegungsspielraum der Zu- oder Ableitung erhalten bleibt.

In einer vorteilhaften Ausführungsform stoßen die Zu- und Ableitungen nicht rechtwinklig auf die Verteilerleitung, sondern sind unter einem Winkel im Bereich von etwa 20° bis etwa 60° an den Verteilerleitungen angeschlossen. Dadurch wird die Belastung der Verbindungsstelle zwischen Zu- oder Ableitung und einer Verteilerleitung bei einer Längenänderung der Verteilerleitung verringert.

Durch das Vorsehen zumindest eines Bogens in jeder Zu- und Ableitung und durch die zumindest das Zehnfache des Absorberrohrdurchmessers betragende fixierungsfreie Strecke im Gehäuse können die Durchmesser der Öffnungen, durch die die Zu- und Ableitungen in das Gehäuse des Sonnenkollektors geführt sind, kleiner gehalten werden. Ohne diese Merkmale müßte bei einer zugrundegelegten maximalen Längenänderung eines Verteilerrohres von 200 mm der Durchmesser der Öffnung für eine Zu- oder Ableitung des Sonnenkollektors etwa 100 mm betragen, d.h. etwa die Hälfte der maximalen Längenänderung. Mit den genannten Merkmalen kann der Durchmesser der Öffnungen in Axialrichtung der Verteilerleitungen beispielsweise auf 50 mm reduziert werden, wobei die Zu- und Ableitungen mit einem oder mehreren Bögen so gestaltet sind, daß sie in der Lage sind, die restlichen 50 mm an Längenveränderung aufzunehmen. Durch die kleineren Öffnungen können auch die elastischen Bälge kleiner und damit billiger gehalten werden.

Im folgenden werden verschiedene Ausführungsformen des erfindungsgemäßen Sonnenkollektors anhand schematischer Zeichnungen näher erläutert. Es zeigt:
- Fig. 1: Ein aus sechs Sonnenkollektoren bestehendes Kollektorfeld einer Solaranlage,
- Fig. 2a: eine Seitenansicht eines elastischen Balgs zur Abdichtung einer oval gestalteten Öffnung im Gehäuse,
- Fig. 2b: die Draufsicht auf den elastischen Balg aus Fig. 2a,
- Fig. 3: die Draufsicht auf einen erfindungsgemäßen Sonnenkollektor,
- Fig. 4a: die Draufsicht auf einen erfindungsgemäßen Sonnenkollektor und dessen Anschluß an eine Verteilerleitung,
- Fig. 4b bis 4e: Draufsichten auf abgewandelte Ausführungsformen, und
- Fig. 5: eine vergrößerte Darstellung einer Verbindung zwischen Zu- oder Ableitung und Verteilerleitung zur Erläuterung einer weiteren Abwandlung.

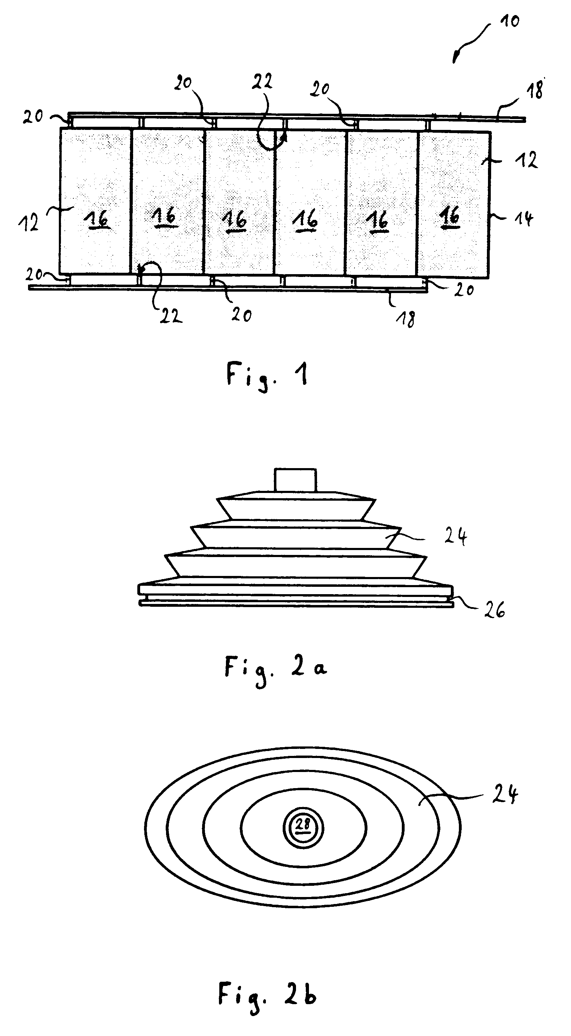

Fig. 1 zeigt eine Solaranlage 10 mit sechs Sonnenkollektoren 12, die in einer Kollektorreihe angeordnet sind. Jeder Sonnenkollektor 12 hat ein - hier nur schematisch angedeutetes - Gehäuse 14, in dem sich ein in Fig. 1 nicht gezeigtes Kollektorabsorberrohr befindet. Durch das Kollektorabsorberrohr fließt ein Wärmeträgermedium, das durch über Sonneneinfallsflächen 16 in jeden Kollektor 12 gelangende Sonnenstrahlung erwärmt wird.

Entlang des Kollektorgehäuses 14 erstrecken sich in einer im wesentlichen zu den Sonneneinfallsflächen 16 der Kollektoren 12 parallelen Ebene Verteilerleitungen 18, die über metallische Zu- und Ableitungen 20 mit dem Kollektorabsorberrohr eines jeden Kollektors 12 verbunden sind. Die Zu- und Ableitungen treten dazu durch Öffnungen 22 im Gehäuse 14 in den Kollektor 12 ein. Die Verteilerleitungen 18 sind an einen nicht gezeigten Kreislauf angeschlossen, in dem sich eine Umwälzpumpe und ein Warmwasserspeicher befinden.

Die Öffnungen 22 im Kollektorgehäuse 14 sind oval ausgeführt und weisen ihre größte Abmessung in Axialrichtung der Verteilerleitungen 18 auf. Diese größte Abmessung ist größer als der doppelte Durchmesser der Zu- oder Ableitung und beträgt höchstens etwa die Hälfte der infolge von Temperaturunterschieden zu erwartenden Längenänderung der angeschlossenen Verteilerleitung 18 für den Fall, daß der doppelte Durchmesser der Zu- oder Ableitung kleiner ist als die Hälfte der zu erwartenden Längenänderung. Da sich die Verteilerleitungen 18 in Axialrichtung gesehen bei einer Temperaturerhöhung nach beiden Seiten hin gleichmäßig ausdehnen, bieten die Öffnungen 22 einen Spielraum, der ein Anstoßen jeder Zu- und Ableitung 20 am Rand der Öffnung 22 ausschließt. Die ovale oder alternativ schlitzförmige Ausführungsform der Öffnungen 22 sichert den Spielraum in der benötigten Richtung und hält andererseits die Öffnungen möglichst klein, was der Stabilität des Gehäuses 14 zugutekommt und eventuelle Wärmeverluste niedrig hält sowie eine Abdichtung erleichtert.

In Fig. 2 ist ein elastischer Balg 24 dargestellt, mit dem der freie Teil einer jeden Öffnung 22 abgedichtet wird, um das Eindringen von Schmutz und Feuchtigkeit zu verhindern. Eine am unteren Teil des Balgs 24 ausgebildete umlaufende Rechtecknut 26 tritt dabei mit dem Rand der Öffnung 22 in Eingriff, wodurch der elastische Balg 24 lösbar mit dem Kollektorgehäuse 14 verbunden ist. Wie aus der Draufsicht (sh. Fig. 2b) hervorgeht, ist die Form des Balgs 24 der Form der Öffnung 22 angepaßt. Der Balg 24 weist eine Durchgangsöffnung 28 für die Zu- oder Ableitung 20 auf, wobei der Durchmesser der Durchgangsöffnung 28 zur besseren Abdichtung etwas kleiner ist als der Durchmesser der Zu- oder Ableitung 20. Bei einer durch Temperaturänderung hervorgerufenen Verschiebung der Zu- oder Ableitung 20 in Axialrichtung der angeschlossenen Verteilerleitung 18 setzt der Balg 24 dieser Verschiebung nur einen vernachlässigbaren Widerstand entgegen.

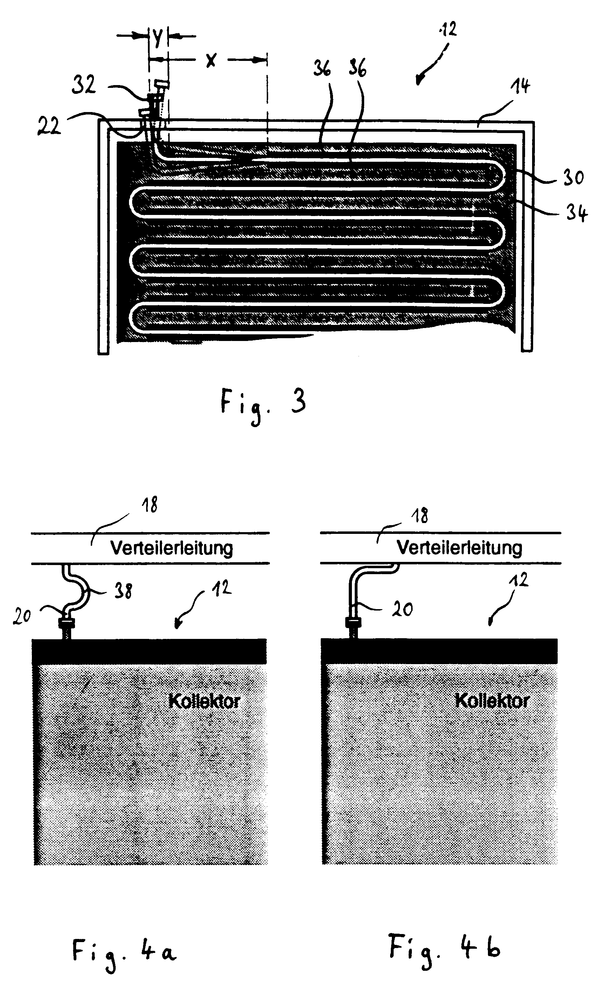

In Fig. 3 ist ein Teil eines Sonnenkollektors 12 mit dem ihn umgebenden Gehäuse 14 und dem Absorberrohr 30 dargestellt, das über die nur zum Teil gezeigte Zu- oder Ableitung 20 an eine in Fig. 3 nicht gezeigte Verteilerleitung angeschlossen ist. Um den Kollektor 12 von der Verteilerleitung trennen zu können, ist in der Zu- oder Ableitung 20 ein Flansch 32 angeordnet, dessen eine Hälfte in Fig. 3 schematisch angedeutet ist. Die Zu- oder Ableitung 20 erstreckt sich durch die Öffnung 22 in das Gehäuse 14, wo sie in das Absorberrohr 30 übergeht. Im Gehäuse 14 ist die Zu- oder Ableitung 20 bzw. das Absorberrohr 30 zunächst nicht befestigt, sondern kann frei schwingen. Erst nach einer gegebenen Strecke x (sh. Fig. 3), die zwischen dem Zehn- und Fünfzigfachen des Absorberrohrdurchmessers beträgt, ist das Absorberrohr 30 auf einer Absorberplatte 34 mit Befestigungen 36 ortsfest fixiert.

Durch gepunktete Linien ist in Fig. 3 angedeutet, wie sich das nicht ortsfest fixierte Ende des Absorberrohrs 30 und der gezeigte Teil der Zu- oder Ableitung 20 bei einer Längenänderung der nicht gezeigten Verteilerleitung mitbewegen. Zur Verdeutlichung ist dabei das Ausmaß der Bewegung übertrieben dargestellt. Es ist zu erkennen, daß verglichen mit herkömmlichen Sonnenkollektoren, bei denen das Absorberrohr 30 bereits nach einer Strecke y (sh. Fig. 3) ortsfest fixiert ist, die aus der Längenänderung der Verteilerleitung resultierende Biegebeanspruchung der Zu- oder Ableitung 20 und des Absorberrohres 30 auf einen wesentlich größeren Bereich verteilt wird, wodurch die mechanische Belastung verringert ist. Bei der in Fig. 3 gezeigten Ausführungsform ist die Zu- oder Ableitung 20 kurz nach dem Eintritt ins Gehäuse 14 beim Übergang in das Absorberrohr 30 ungefähr rechtwinklig gebogen, was die Elastizität erhöht und sich günstig auf die Aufnahmefähigkeit für Biegebeanspruchungen auswirkt.

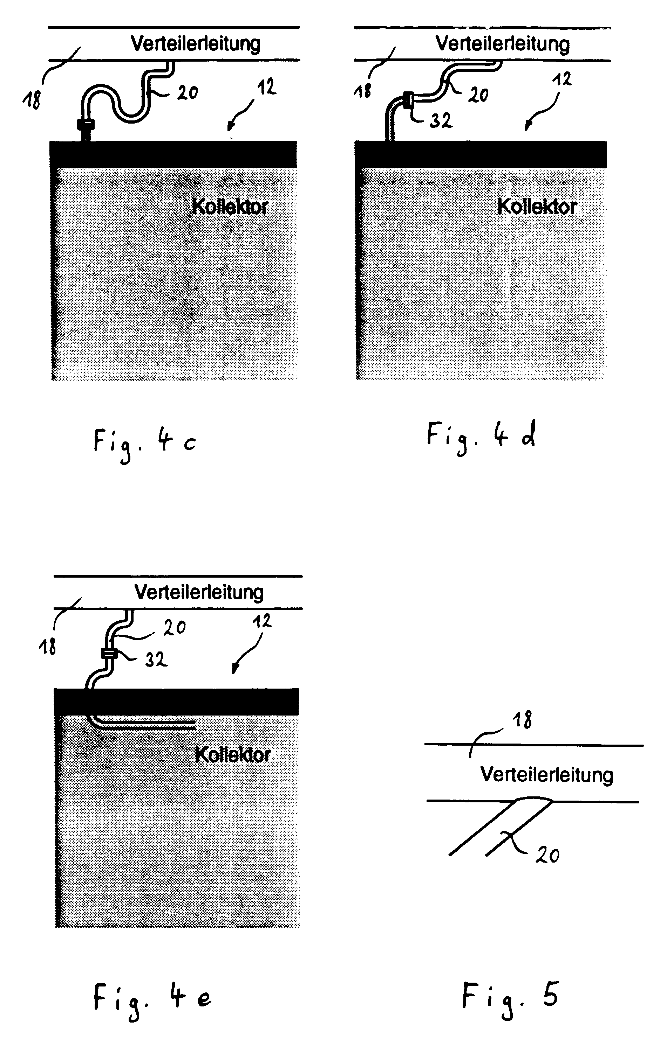

In Fig. 4a ist schematisch ein Sonnenkollektor 12 dargestellt, der über die Zu- oder Ableitung 20 an die Verteilerleitung 18 angeschlossen ist. Die Zu- oder Ableitung 20 weist einen halbkreisförmigen Bogen 38 auf. Der Bogen 38 erhöht die Elastizität der Zu- oder Ableitung 20, so daß bei Längenänderungen der Verteilerleitung 18 in Axialrichtung die mechanische Beanspruchung der Zu- oder Ableitung 20 herabgesetzt ist.

Fig. 4b zeigt eine abgewandelte Ausführungsform mit weiter verbesserter Elastizität der Zu- oder Ableitung 20. Insbesondere ist bei dieser Ausführungsform die Verbindungsstelle zwischen Zu- oder Ableitung 20 und Verteilerleitung 18 bei einer Längenänderung letzterer weniger belastet. Zusätzlich kann bei dieser Ausführungsform die Zu- oder Ableitung 20 an ihrem im wesentlichen parallel zur Verteilerleitung 18 verlaufenden Abschnitt eine weitere mechanische Verbindung zur Verteilerleitung 18 aufweisen (nicht gezeigt). Die mechanische Verbindung kann beispielsweise durch eine Lötstelle zwischen der Zu- oder Ableitung 20 und der Verteilerleitung 18 erfolgen. Ist der Abstand zwischen der Verteilerleitung 18 und dem parallel verlaufenden Abschnitt der Zu- oder Ableitung 20 etwas größer, so kann auch ein den Zwischenraum überbrückendes, beidseitig verlötetes Materialstück angeordnet sein. Die Zu- oder Ableitung kann auch mittels einer zusätzlichen Rohrschelle an die Verteilerleitung 18 gekoppelt sein, wobei die nichtgezeigte Rohrschelle beide Leitungen 18, 20 umschließt. Die zusätzliche mechanische Verbindung bewirkt, daß die Stelle, an der die Zu- oder Ableitung 20 in die Verteilerleitung 18 einmündet, entlastet wird und damit die Gefahr des Verbiegens und Reißens an dieser Stelle herabgesetzt ist.

In den Figuren 4c bis 4e sind weitere abgewandelte Ausführungsformen von Zu- oder Ableitungen 20 gezeigt, wie sie insbesondere dann eingesetzt werden, wenn die zu erwartende Längenänderung der Verteilerleitung 18 groß ist. Statt eines Bogens 38 (sh. Fig. 4a) weist die Zu- oder Ableitung 20 bei diesen Ausführungsformen mehrere Bögen auf, um eine größere elastische Verformbarkeit der Zu- oder Ableitung 20 sicherzustellen. Bei den Ausführungsformen gemäß Fig. 4d und 4e weist auch der kollektorseitige Teil der Zu- oder Ableitung 20 einen bzw. zwei Bögen auf, wodurch die Aufnahmefähigkeit der Zu- oder Ableitung 20 für Biegebeanspruchung weiter erhöht und gleichmäßiger verteilt wird.

Fig. 5 zeigt vergrößert eine Verbindungsstelle zwischen Zu- oder Ableitung 20 und der Verteilerleitung 18. Dabei ist die Zu- oder Ableitung 20 unter einem Winkel von ungefähr 45° an der Verteilerleitung 18 angeschlossen. Verglichen mit einer im rechten Winkel auf die Verteilerleitung stoßenden Zu- oder Ableitung 20 ist dabei die Krafteinleitung bei einer Längenänderung der Verteilerleitung 18 günstiger und die Dauerhaftigkeit der Verbindungsstelle ist erhöht.

## Patentansprüche

1. Sonnenkollektor (12) mit einem Gehäuse (14) und einem darin befestigten Absorberrohr (30), das über je eine durch Öffnungen (22) in das Gehäuse (14) geführte Zu- oder Ableitung (20) aus duktilem Material mit Verteilerleitungen (18) verbunden ist, die sich entlang des Gehäuses (14) in einer im wesentlichen zur Sonneneinfallsfläche (16) des Kollektors (12) parallelen Ebene erstrecken, wobei die Zu- und Ableitungen (20) je zumindest einen Bogen (38) aufweisen und die Enden des Absorberrohrs (30) erst nach einer gegebenen Strecke (x), die sich von der jedem Ende zugeordneten Öffnung (22) an bemißt und zumindest das Zehnfache des Absorberrohrdurchmessers beträgt, im Gehäuse (14) ortsfest fixiert ist.

2. Sonnenkollektor nach Anspruch 1,
dadurch **gekennzeichnet,** daß der Durchmesser jeder Öffnung (22) im Gehäuse (14) in Axialrichtung der Verteilerleitungen (18) größer als der doppelte Durchmesser der Zu- oder Ableitung (20) ist und höchstens etwa die Hälfte der infolge von Temperaturunterschieden zu erwartenden Längenänderung der mit der Zu- oder Ableitung (20) verbundenen Verteilerleitung (18) beträgt, sofern die halbe Längenänderung betragsmäßig den doppelten Durchmesser der Zu- oder Ableitung (20) übersteigt.

3. Sonnenkollektor nach einem der vorhergehenden Ansprüche,
dadurch **gekennzeichnet,** daß zur Abdichtung der Öffnungen (22) im Gehäuse (14) elastische Bälge (24) zwischen jeder Öffnung (22) und einer Zu- oder Ableitung (20) vorhanden sind.

4. Sonnenkollektor nach einem der vorhergehenden Ansprüche,
dadurch **gekennzeichnet,** daß die Zu- und Ableitungen (20) unter einem Winkel im Bereich von etwa 20° bis etwa 60° an den Verteilerleitungen (18) angeschlossen sind.

5. Sonnenkollektor nach einem der vorhergehenden Ansprüche,
dadurch **gekennzeichnet,** daß die gegebene Strecke (x) zumindest das Fünfzehnfache des Absorberrohrdurchmessers beträgt.

6. Sonnenkollektor nach einem der Ansprüche 1 bis 4,
dadurch **gekennzeichnet,** daß die gegebene Strecke (x) zumindest das Zwanzigfache des Absorberrohrdurchmessers beträgt.

7. Sonnenkollektor nach einem der Ansprüche 1 bis 4,
dadurch **gekennzeichnet,** daß die gegebene Strecke (x) das Zwanzig- bis Fünfzigfache des Absorberrohrdurchmessers beträgt.

## Claims

1. A solar collector (12) comprising a housing (14) and an absorber tube (30) mounted therein which is connected, via one inlet or outlet (20), respectively, of ductile material which are led through openings (22) into the housing (14), to distributing conduits (18) extending along the housing (14) in a plane substantially parallel to the sun incidence area (16) of the collector (12), wherein each of the inlets and outlets (20) comprises at least one arc (38) and the ends of the absorber tube (30) are mounted stationary in the housing (14) only after a given distance (x) being measured from the opening (22) associated with each end and being at least ten times greater than the absorber tube diameter.

2. A solar collector according to claim 1,
characterized in that the diameter of each opening (22) in the housing (14) in axial direction of the distributing conduits (18) is greater than the double diameter of the inlet or outlet (20) and amounts at most to approximately half of the alternation of length to be expected due to differences in temperature of the distributing conduit (18) connected to the inlet or outlet (20), if the value of half of the alternation of length exceeds the double diameter of the inlet or outlet (20).

3. A solar collector according to anyone of the preceding claims,
characterized in that for sealing the openings (22) in the housing (14) elastic bellows (24) are provided between each opening (22) and an inlet or outlet (20).

4. A solar collector according to anyone of the preceding claims,
characterized in that the inlets and outlets (20) are connected to the distributing conduits (18) at an angle within a range of approximately 20° to approximately 60°.

5. A solar collector according to anyone of the preceding claims,
characterized in that the given distance (x) is at least fifteen times greater than the absorber tube diameter.

6. A solar collector according to anyone of claims 1 to 4,
characterized in that the given distance (x) is at least twenty times greater than the absorber tube diameter.

7. A solar collector according to anyone of claims 1 to 4,
characterized in that the given distance (x) is at least twenty to fifty times greater than the absorber tube diameter.

## Revendications

1. Collecteur solaire (12) comprenant un corps (14) et un tube absorbeur (30) fixé dans ce corps, qui relié, par des conduites d'arrivée ou de départ (20) faites d'une matière ductile, et qui pénètrent dans le corps (14), chacune à travers une ouverture (22), à des conduites de distribution (18) qui s'étendent le long du corps (14) dans un plan sensiblement parallèle à la surface (16) d'entrée du rayonnement solaire du collecteur (12), les conduites d'arrivée et de départ (20) présentant chacune au moins un coude (38), et les extrémités du tube absorbeur (30) n'étant fixées à un point fixe dans le corps (14) qu'après une distance donnée (x) qui, mesurée à partir de l'ouverture (22) correspondant à chaque extrémité, représente au moins dix fois le diamètre du tube absorbeur.

2. Collecteur solaire selon la revendication 1, caractérisé en ce que le diamètre de chaque ouverture (22) du corps (14), mesuré dans la direction axiale des conduites de distribution (18), est supérieur au double du diamètre de la conduite d'arrivée ou de départ (20) et représente au maximum à peu près la moitié de la variation attendue de la longueur de la conduite de distribution (18) raccordée à la conduite d'arrivée ou de départ (20) qui peut résulter des écarts de température, si la moitié de la variation de longueur excède, en amplitude le double du diamètre de la conduite d'arrivée ou de départ (20).

3. Collecteur solaire selon une des revendications précédentes, caractérisé en ce que, pour fermer à joint étanche les ouvertures (22) du corps (14), des soufflets élastiques (24) sont prévus entre chaque ouverture (22) et une conduite d'arrivée ou de départ (20).

4. Collecteur solaire selon une des revendications précédentes, caractérisé en ce que les conduites d'arrivée et de départ (20) se raccordent aux conduites de distribution (18) sous un angle de l'intervalle d'environ 20° à environ 60°.

5. Collecteur solaire selon une des revendications précédentes, caractérisé en ce que la distance donnée (x) représente au moins quinze fois le diamètre du tube absorbeur.

6. Collecteur solaire selon une des revendications 1 à 4, caractérisé en ce que la distance donnée (x) représente au moins vingt fois le diamètre du tube absorbeur.

7. Collecteur solaire selon une des revendications 1 à 4, caractérisé en ce que la distance donnée (x) représente de vingt à cinquante fois le diamètre du tube absorbeur.
